# EUROPEAN PATENT SPECIFICATION

(11) **EP 2 391 518 B1**
(45) Date of publication and mention of the grant of the patent: **18.12.2019**
(21) Application number: 10707691.1
(22) Date of filing: 27.01.2010
(51) Int. Cl.: B60K 6/10, B60K 6/12, B60K 6/365, B60K 6/387, B60K 6/543, B60W 30/18, B60W 10/02

(54) **FLYWHEEL MODULE**
SCHWUNGRADMODUL
MODULE DE VOLANT

(30) Priority: 27.01.2009 NL 2002453
(43) Date of publication of application: 07.12.2011
(73) Proprietor: DTI Group B.V., 5653 LD Eindhoven (NL)
(72) Inventor: VAN DRUTEN, Roëll Marie, 5658 EG Eindhoven (NL); SERRARENS, Alexander Franciscus Anita, 5653 LD Eindhoven (NL); VROEMEN, Bas Gerard, 5653 LD Eindhoven (NL)
(74) Representative: V.O.
(86) International application number: PCT/NL2010/050039
(87) International publication number: WO 2010/087705

(56) References cited:
- EP-A1- 0 043 909
- WO-A1-2009/010819
- WO-A2-2007/138353
- FR-A1- 2 467 095
- US-A1- 2003 098 185

## Description

### Field of the invention.

The invention relates to a flywheel module to be used in a vehicle provided with a driving source and a transmission, comprising:
- a coupling unit comprising:
- an input shaft, which can be coupled to the driving source, and
- an output shaft, which can be coupled to the transmission,
and comprising a first coupling, which is present between the input shaft and the output shaft and which comprises:
- a first coupling half connected to the input shaft, and
- a second coupling half connected to the output shaft,
   as well as
- a flywheel unit having an in/output and including:
   i) a flywheel, and
   ii) a reduction gear unit having an input which is connected to the flywheel and an output which is connected to the in/output of the flywheel unit, and comprising:
      a) a reduction gearing as well as
      b) a coupling device which is connected to the reduction gearing.
   wherein the flywheel unit is connected with its in/output to the coupling unit, this in/output being connected via a node to the second coupling half of the first coupling and/or to the output shaft.

### State of the art.

A transmission system comprising a flywheel module of this type is known from US patent US 5 569 108. In the known transmission system the flywheel unit is connected with its in/output and furthermore with a further in/output to the coupling unit, while this further in/output is connected to the first coupling half of the first coupling. The reduction gearing in this known flywheel module is formed by a planetary gear set having three rotational members, a first rotational member of which being connected to the flywheel, a second rotational member being connected via a brake to a node positioned between the second coupling half and the output shaft and the third rotational member being connected via a brake to the further in/output. This known flywheel module is relatively complex.

A transmission system comprising a flywheel module of this type is also known from patent publication WO2009/010819, disclosing a powertrain comprising a variable ratio transmission device having an input shaft coupled to an engine and an output shaft coupled to a driven unit, a three-way power split transmission device including three input/output couplings, a first of which is coupled to a flywheel and a second of which is coupled to an electrical machine. The third input/output coupling of the three way power split transmission device is mechanically coupled to the engine and to the input shaft of the variable ratio transmission device.

### Summary of the invention.

It is an object of the invention to provide a flywheel module, which is less complex than the known flywheel module. This object is solved by a flywheel module having the features of claim 1. For this purpose the flywheel module according to the invention is characterised, in that the flywheel module further comprises a hydraulic pump which is connected to the node. The flywheel unit is preferably exclusively connected with its in/output to the coupling unit. Furthermore, preferably the first coupling is closed in non-energized state.

The transmission is preferably a continuously variable transmission and may be a mechanical (pulleys with push belt or chain), a powersplit mechanical, an electrical, or a powersplit electrical continuously variable transmission. The driving source may be a combustion engine or an electromotor.

the pump is then over-dimensioned and produces more losses than necessary also in this situation.

An additional disadvantage of this is that if the driving source is switched off, for example in a hybrid application (idle stop, start stop), no pressure is available for enabling the launch of the vehicle.

An embodiment of the flywheel module according to the invention, in which the aforementioned disadvantages do not occur is characterized, in that the flywheel module comprises a hydraulic buffer which is connected to the pump. As a result, the pump may be down-sized (caused to deliver less flow), while under normal working conditions the flow is still sufficient for all its functions to be performed, so that no energy is wasted. In the case where much flow is needed, the accumulator can help out. Besides, the accumulator can produce pressure if the driving source is in the off mode.

The flywheel module further preferably comprises en electromotor which can drive the pump, as well as a freewheel bearing which is positioned between on the one hand the pump plus electromotor and the node on the other. The pump then does not have a direct connection to the node. In consequence, the pump can electrically be brought to a higher speed than the input shaft of the CVT, so that the pump may be down-sized further. The electromotor is operated in start-stop mode in which the hydraulic accumulator is charged.

It should be observed that the pump and accumulator or the pump and accumulator and electromotor and freewheel bearing can also be advantageously applied to a module without a flywheel unit.

The flywheel module can be a separate module which can be built in in a simple fashion in an already existing drive of a vehicle. To this end an embodiment of the flywheel module according to the invention is characterised, in that the flywheel module further includes:
- first coupling means, for coupling the input shaft to the driving source, as well as
- second coupling means, for coupling the output shaft to the transmission, which first and second coupling means are arranged as splines present on or in the input and output shafts.

A further embodiment of the flywheel module according to the invention is characterised in that the reduction gearing is formed by a gear transmission.

In one embodiment the coupling device is formed by a second coupling which is connected to the reduction gearing, the reduction gearing being positioned between the second coupling and the flywheel. Preferably, the second coupling is open in non-energized state.

In another embodiment the coupling device comprises a coupling support device as well as a planetary gear set comprising three rotational members, a first rotational member of which being connected to the coupling support device, a second rotational member being connected to the gear transmission and the third rotational member being connected to the in/output of the flywheel unit. The coupling support device preferably comprises an electromotor or a brake.

A further embodiment of the flywheel module according to the invention is characterised, in that the flywheel unit further comprises a further flywheel which is connected to the gear transmission.

Another embodiment of the flywheel module according to the invention is characterised, in that the reduction gearing is formed by a planetary gear set and the coupling device is formed by a friction brake, which gear set comprises three rotational members, a first rotational member of which being connected to the flywheel, a second rotational member being connected to the output of the reduction gear unit and the third rotational member being connected to the friction brake.

A still further embodiment of the flywheel module according to the invention is characterised, in that a third coupling is positioned between the flywheel and the reduction gear unit.

Yet another embodiment of the flywheel module according to the invention is characterised, in that the flywheel is located in an airtight housing in which there is underpressure, with the third coupling being arranged as a magnetic coupling of which one coupling half is located inside the housing and is connected to the flywheel and the other coupling half is located outside the housing.

For obtaining additional functionality a still further embodiment of the transmission system according to the invention is characterised, in that the in/output of the flywheel unit is further connected to the first coupling half of the first coupling, with a fourth coupling being positioned between the in/output of the flywheel module and the first coupling half.

A further reduction gearing is preferably positioned between the in/output of the flywheel module and the node.

Yet again a further embodiment of the flywheel module according to the invention is characterised, in that the flywheel module further includes an electrical machine which is connected to the node or to the further reduction gearing if there is a further reduction gearing positioned between the in/output of the flywheel module and the node.

The invention further also relates to a transmission system for use in a vehicle that comprises a driving source arranged as a combustion engine and driven wheels, which transmission system comprises a transmission having a first in/output shaft and a second in/output shaft which can be connected to the driven wheels, as well as a flywheel module according to the invention, of which the input shaft can be coupled to the combustion engine and the output shaft can be coupled to the first in/output of the transmission, between the node and the first or second in/output shaft of the transmission there being positioned a fifth coupling. The fifth coupling is preferably open in non-energized state.

Preferably all component parts, except for the flywheel, are present in a further housing which is in open connection to or integral with the housing of the transmission.

The invention further relates to a method for starting a combustion engine of a vehicle during driving, which vehicle comprises driven wheels in addition to the combustion engine and a transmission system according to the invention positioned therebetween, while during the driving the first coupling is open and the second and fifth couplings are closed. With respect to this method the invention is characterised, in that the fifth coupling is operated in slipping fashion, on which occasion the first coupling is closed and the combustion engine is started, after which the fifth coupling is closed completely.

Furthermore, the invention relates to a method for starting a combustion engine of a vehicle during the launch, which vehicle comprises driven wheels in addition to the combustion engine as well as a transmission system according to the invention positioned therebetween, at the time of the launch of the vehicle the first coupling being open, the second coupling being closed and the fifth coupling being in a slipping mode. With respect to this method the invention is characterised, in that prior to the fifth coupling being closed completely, the first coupling is closed, on which occasion the combustion engine is started, after which the fifth coupling is closed completely.

### Brief description of the drawings.

The invention will be further elucidated below in more detail with reference to examples of embodiments of the flywheel module and the transmission system according to the invention and represented in the drawing figures, in which:
Fig. 1 shows a first embodiment of a flywheel module, which does not form part of the present invention, in which the reduction gear unit is arranged as a planetary gear set and a friction brake;
Fig. 2 shows a second embodiment of a flywheel module, which does not form part of the present invention, in which the reduction gear unit is arranged as a gear transmission and a coupling;
Fig. 3 shows a third embodiment of a flywheel module, which does not form part of the present invention, in which the flywheel unit is further connected to the first coupling half of the first coupling;
Fig. 4 shows a fourth embodiment of a flywheel module, which does not form part of the present invention, in which a fifth coupling is present between the node and the transmission;
Fig. 5 shows a fifth embodiment of a flywheel module, which does not form part of the present invention, in which the coupling device is formed by a planetary gear set and an electromotor;
Fig. 6 shows flywheel module according to the invention, comprising a hydraulic system;
Fig. 7 shows a further embodiment of a flywheel module, which does not form part of the present invention, in which the flywheel module is provided with coupling means;
Figs. 8-10 show three variants of the flywheel module shown in Fig. 7; and
Figs. 11-13 show concrete embodiments of the flywheel modules shown in Figs. 8-10.

### Detailed description of the drawings.

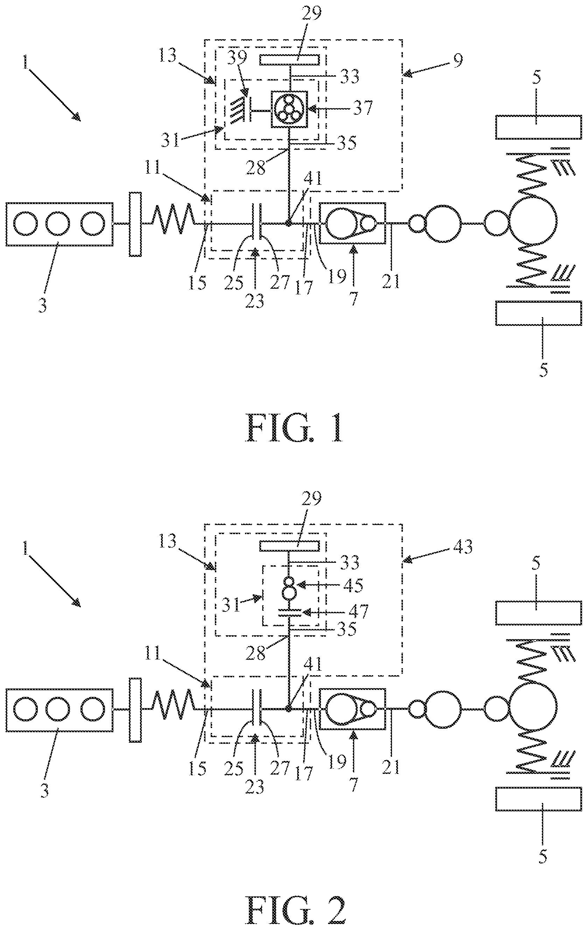

Fig. 1 shows a layout of a vehicle comprising a transmission system in a first embodiment, which does not form part of the present invention, of the flywheel module. The vehicle 1 has a driving source 3 which is connected to the driven wheels 5 via a transmission system. The transmission system comprises a transmission 7 and a flywheel module 9 positioned between the driving source and transmission.

The flywheel module 9 comprises a coupling unit 11 and a flywheel unit 13. The coupling unit comprises an input shaft 15 which is connected to the driving source , and an output shaft 17 which is connected to a first in/output 19 of the transmission 7. A second in/output 21 of the transmission is connected to the driven wheels 5. The coupling unit further comprises a first coupling 23 which comprises a first coupling half 25 connected to the input shaft, and a second coupling half 27 connected to the output shaft.

The flywheel unit comprises an in/output 28 as well as a flywheel 29 and a reduction gear unit 31 which has an input 33 connected to the flywheel, and an output 35 which is connected to the in/output of the flywheel unit. The reduction gear unit comprises a reduction gearing and a coupling device connected to the reduction gearing. The reduction gear unit is comprised of a reduction gearing and a coupling device. The reduction gearing is in this case formed by a planetary gear set 37 and the coupling device by a friction brake 39. This planetary gear set 37 comprises three rotational members, a first rotational member of which being connected to the flywheel 29, a second rotational member being connected via a node 41 to the coupling device 11, and the third rotational member being connected to the friction brake 39.

Fig. 2 shows a layout of a vehicle comprising a second embodiment, which does not form part of the present invention, of the flywheel module. All components that are equal to those of the first embodiment shown in Fig. 1 are designated by like reference numerals. This flywheel module differs from the first embodiment in that the reduction gear unit 31 comprises a gear transmission 45 and a second coupling 47 which is arranged as a friction coupling. There may even be positioned a third coupling (not shown) between the flywheel 29 and the reduction gear unit 31.

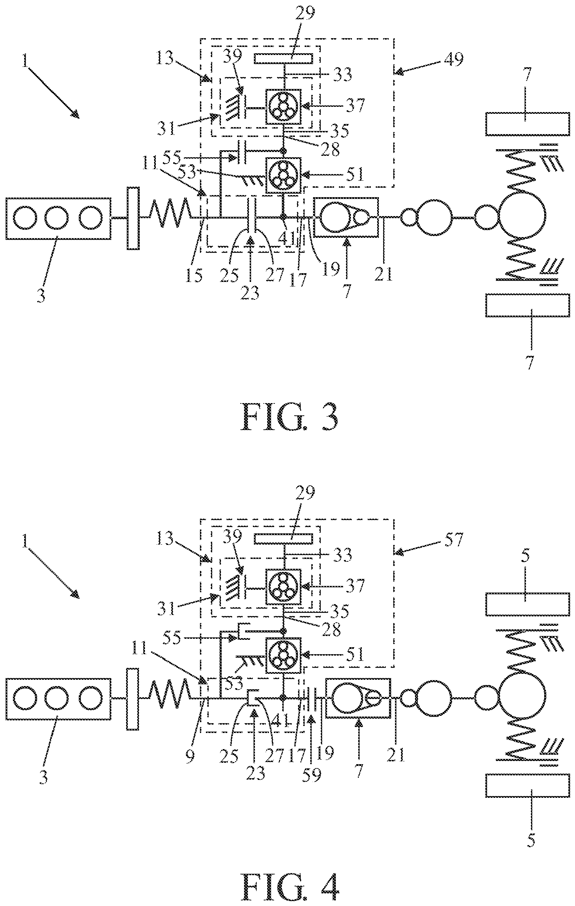

Fig. 3 shows a layout of a vehicle comprising a third embodiment, which does not form part of the present invention, of the flywheel module. All components that are equal to those of the first embodiment shown in Fig. 1 are designated by like reference numerals. This flywheel module 49 comprises a further reduction gearing 51 between the in/output 28 of the flywheel unit 13 and the node 41. This reduction gearing 51 is formed by a further planetary gear set having three rotational members, a first rotational member of which being connected to the in/output 28, a second rotational member being connected to the node 41, and the third rotational member being connected to the firm object 53, for example the housing of the transmission system.

In this flywheel module 49 the in/output 28 of the flywheel unit 13 is further connected to the first coupling half 25 of the first coupling 23 via a fourth coupling 55. The first coupling 23 and the fourth coupling 55 are both arranged as a friction coupling.

Fig. 4 shows a layout of a vehicle comprising a fourth embodiment, which does not form part of the present invention, of the flywheel module. All components that are equal to those of the third embodiment shown in Fig. 3 are designated by like reference numerals. This flywheel module 57 differs from the third embodiment in that yet a fifth coupling 59 is present between the node 41 and the continuously variable transmission 7. Furthermore, the first coupling 23 and the fourth coupling 55 are both arranged as a claw coupling or synchromesh.

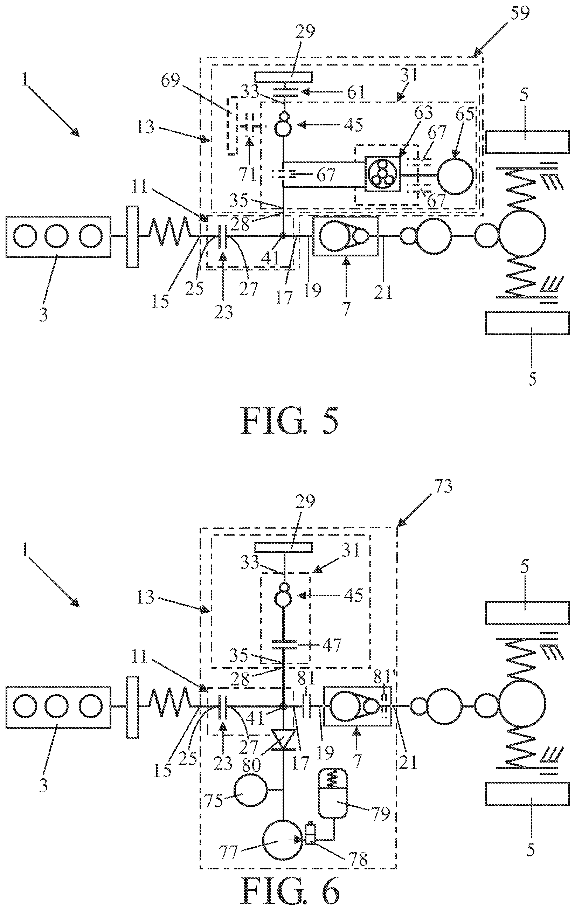

Fig. 5 shows a layout of a vehicle comprising a fifth embodiment, which does not form part of the present invention, of the flywheel module. All components that are equal to those of the second embodiment shown in Fig. 2 are designated by like reference numerals. In this flywheel module 59 the third coupling 61 is positioned between the gear transmission 45 and the flywheel 29. Furthermore, in this case the coupling device is formed by a planetary gear set 63 and a coupling support device 65, which in this embodiment is formed by an electromotor and is connected to one of the rotational members of the planetary gear set. In this embodiment yet a further coupling 67 (indicated in broken lines) may be positioned between two out of three rotational members of the planetary gear set 63. In addition, a further flywheel 69 can be connected to the reduction gearing 45 via yet another coupling 71 (also indicated in broken lines).

Fig. 6 shows a layout of a vehicle comprising an embodiment of the flywheel module according to the invention. All components that are equal to those of the second embodiment shown in Fig. 2 are designated by like reference numerals. In this flywheel module 73 an electrical machine in the form of an electromotor/generator 75 and a hydraulic pump 77 are connected to the node 41 and, furthermore, a hydraulic accumulator 79 is connected to the pump 77. Here too, there is a fifth coupling 81 between the node and the first in/output shaft 19 of the transmission 7. The fifth coupling, however, may also be present in the secondary shaft of the transmission 7 (designated by 81'). The first coupling 23 is preferably a coupling that is normally closed, which is to say that if this coupling is not operated/energized, it is closed. The second and fifth couplings 47 and 81 are preferably normally open.

In this flywheel module 73 the electromotor 75 is positioned close to the pump 77 and, furthermore, a freewheel bearing 80 is positioned between on the one hand the pump 77 and the electromotor 75 and on the other hand the node 41. Between the pump and the accumulator there is a valve 78 for shutting off and releasing the connection between the two. The electromotor 75 can be instrumental in bringing the pump 77 to a higher speed than the input shaft 19 of the transmission 7, so that the pump can be downsized further. The electromotor 75 is operated in the start-stop mode during which the hydraulic accumulator 79 is charged.

Prior to the launch of the vehicle, the coupling 81 is first to be closed and the coupling 23 to be opened. Now the vehicle can be launched on the electromotor 75 while the pressure for operating the couplings 23 and 81 and the transmission 7 is supplied by the hydraulic accumulator 79.

For starting the driving source 3 of the vehicle during driving (coupling 81 closed and coupling 23 open), the coupling 81 is operated in a slipping manner while coupling 23 is open. Subsequently, the coupling 23 is closed while the driving source 3 embodied as a combustion engine is started, after which the coupling 81 is closed completely.

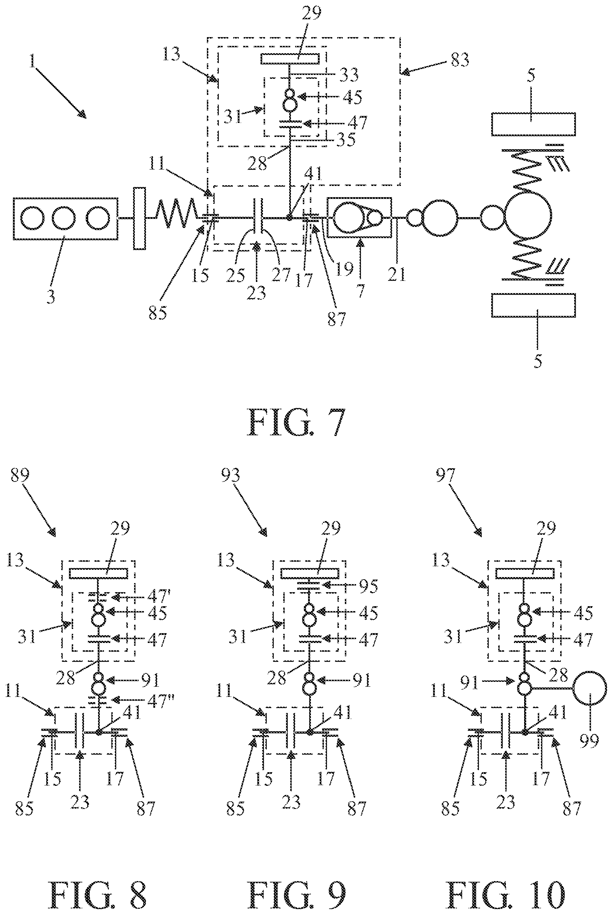

Fig. 7 shows a further embodiment, which does not form part of the present invention, of the flywheel module. This flywheel module 83 comprises first coupling means 85 for coupling the input shaft 15 to the driving source 3, and second coupling means 87 for coupling the output shaft 17 to the transmission 7. The first and second coupling means are arranged as splines present on or in the input and output shafts 15, 17.

Figs. 8, 9 and 10 show three variants of the flywheel module shown in Fig. 7. In the flywheel module 89 shown in Fig. 8 a further reduction gearing 91 is present between the reduction gear unit 31 and the coupling unit 11. The second coupling 47 may then also be positioned between the reduction gearing 45 and the flywheel 29 (designated by 47') in lieu of between the two reduction gearings 45 and 49, or between the further reduction gearing 49 and the node 41 (designated by 47"). In the flywheel module 93 shown in Fig. 9 a third coupling 95 is further positioned between the reduction gear unit 31 and the flywheel 29, and in the flywheel module 97 shown in Fig. 10 an electromotor 99 is connected to the further reduction gearing 91.

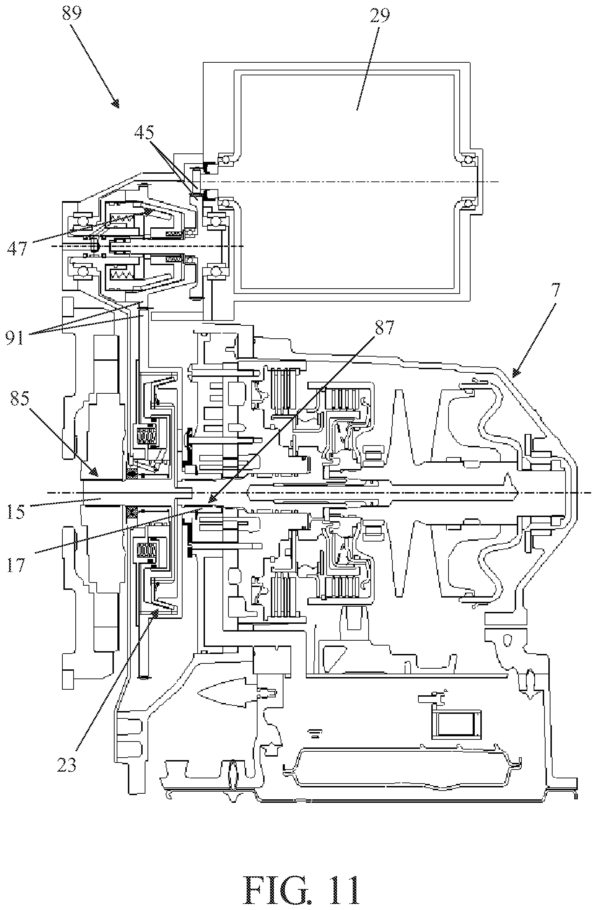

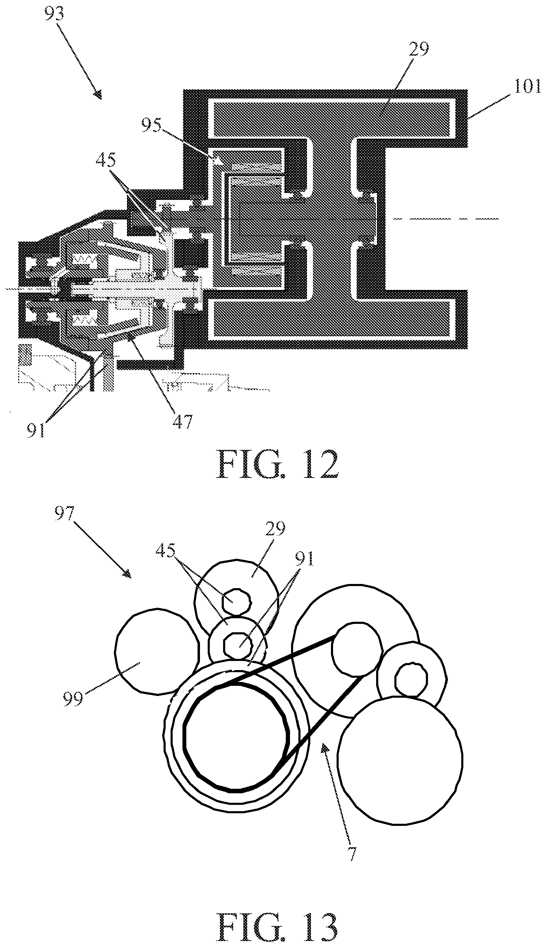

In Figs. 11, 12 and 13 are shown concrete embodiments of the flywheel modules 89, 93 and 97 shown in Figs. 8, 9 and 10. In the flywheel module 89 shown in Fig. 11 the input shaft 15 has external splines 85 and the output shaft 17 is hollow and has internal splines 87. In the flywheel module 93 shown in Fig. 12 the flywheel 29 is located in an airtight housing 101 in which there is underpressure. The third coupling 95 is arranged as a magnetic coupling of which one coupling half is located inside the housing 101 and the other coupling half is located outside the housing. In the flywheel module 97 shown in Fig. 13 the electromotor 99 meshes with a gear present on the shaft with a gear of the further reduction gearing 91.

Albeit the invention has been described in the foregoing with reference to the drawing Figures, it should be pointed out that the invention is not by any manner or means restricted to the embodiments shown in the drawing Figures. The invention also extends over any embodiments deviating from the embodiments shown in the drawing Figures within the scope defined by the claims.

## Claims

1. A flywheel module (73) to be used in a vehicle provided with a driving source (3) and a transmission (7), comprising:
- a coupling unit (11) comprising:
- an input shaft (15) which can be coupled to the driving source (3), and
- an output shaft (17) which can be coupled to the transmission (7), and comprising a first coupling (23) which is present between the input shaft (15) and the output shaft (17) and which comprises:
- a first coupling half (25) connected to the input shaft (15), and
- a second coupling half (27) connected to the output shaft (17), as well as
- a flywheel unit (13) having an in/output (28) and including:
i) a flywheel (29), and
ii) a reduction gear unit (31) having an input (33) which is connected to the flywheel (29) and an output (35) which is connected to the in/output (28) of the flywheel unit (13), and comprising:
a) a reduction gearing (37, 45) as well as
b) a coupling device (39, 47) which is connected to the reduction gearing (37, 45),
**characterized in that**
the flywheel unit (13) is connected with its in/output (28) to the coupling unit (11), this in/output (28) being connected via a node (41) to the second coupling half (27) of the first coupling (23) and/or to the output shaft (17), wherein the flywheel module (73) further includes a hydraulic pump (77) which is connected to the node (41).

2. A flywheel module (73) as claimed in claim 1, **characterized in that** the first coupling (23) is arranged such that if it is not energized it is closed.

3. A flywheel module as claimed in any of the preceding claims, **characterized in that** the flywheel module further includes a hydraulic buffer which is connected to the pump.

4. A flywheel module as claimed in claim 3, **characterized in that** the flywheel module comprises an electromotor which can drive the pump, as well as a freewheel bearing which is positioned between on the one hand the pump plus electromotor and the node on the other.

5. A flywheel module (73) as claimed in any one of the preceding claims, **characterized in that** the flywheel module (73) further includes:
- first coupling means (85), for coupling the input shaft (15) to the driving source (3), as well as
- second coupling means (87), for coupling the output shaft (17) to the transmission (7), which first and second coupling means (85, 87) are arranged as splines present on or in input and output shafts (15, 17).

6. A flywheel module (73) as claimed in any one of the preceding claims, **characterized in that** the reduction gearing is formed by a gear transmission (45).

7. A flywheel module (73) as claimed in claim 6, **characterized in that** the coupling device is formed by a second coupling (47) which is connected to the reduction gearing (45), with the reduction gearing (45) being positioned between the second coupling (47) and the flywheel (29).

8. A flywheel module (73) as claimed in claim 7, **characterized in that** the first coupling (23) is arranged such that it is closed if it is not energized.

9. A flywheel module (73) as claimed in claim 6, **characterized in that** the coupling device (47) comprises a coupling support device (65) as well as a planetary gear set (63) comprising three rotational members, a first rotational member of which being connected to the coupling support device (65), a second rotational member being connected to the gear transmission (45) and the third rotational member being connected to the in/output of the flywheel unit (28).

10. A flywheel module (73) as claimed in any one of the preceding claims 1 to 5, **characterized in that** the reduction gearing is formed by a planetary gear set (37) and the coupling device by a friction brake (39), which gear set (37) comprises three rotational members, a first rotational member of which being connected to the flywheel (29), a second rotational member being connected to the output (35) of the reduction gear unit (31) and the third rotational member being connected to the friction brake (39).

11. A flywheel module (73) as claimed in any one of the preceding claims, **characterized in that** the in/output (28) of the flywheel unit (13) is further connected to the first coupling half (25) of the first coupling (23), with a fourth coupling (55) being positioned between the in/output (28) of the flywheel module (73) and the first coupling half (25).

12. A transmission system for use in a vehicle that comprises a driving source (3) arranged as a combustion engine and driven wheels (5), which transmission system comprises a transmission (7) having a first in/output shaft (19) and a second in/output shaft (21) which can be connected to the driven wheels (5), as well as a flywheel module (73) as claimed in any one of the preceding claims, of which the input shaft (15) can be coupled to the combustion engine (3) and the output shaft (17) can be coupled to the first in/output (19) of the transmission (7), between the node (41) and the first or second in/output (19,21) shaft of the transmission (7) there being positioned a fifth coupling (59, 81).

13. Method for starting a combustion engine (3) of a vehicle during driving, which vehicle comprises driven wheels (5) in addition to the combustion engine (3) and a transmission system as claimed in claim 12 positioned therebetween, while during the driving the first coupling (23) is open and the second and fifth couplings (47, 59, 81) are closed, **characterized in that** the fifth coupling (59, 81) is operated in slipping fashion, on which occasion the first coupling (23) is closed and the combustion engine is started, after which the fifth coupling (59, 81) is closed completely.

14. A method for starting a combustion engine (3) of a vehicle during the launch, which vehicle comprises driven wheels (5) in addition to the combustion engine (3) as well as a transmission system as claimed in claim 12 arranged therebetween, at the time of the launch of the vehicle the first coupling (23) being open, the second coupling (47) being closed and the fifth (59, 81) coupling being in a slipping mode, **characterized in that** prior to the fifth coupling (59, 81) being closed completely, the first coupling (23) is closed, on which occasion the combustion engine (23) is started, after which the fifth coupling (59, 81) is closed completely.

## Patentansprüche

1. Schwungradmodul (73) zur Verwendung in einem Fahrzeug, das mit einer Antriebsquelle (3) und einem Getriebe (7) versehen ist, umfassend:
- eine Kupplungseinheit (11), umfassend:
- eine mit der Antriebsquelle (3) koppelbare Antriebswelle (15) und
- eine mit dem Getriebe (7) koppelbare Abtriebswelle (17) mit einer ersten Kupplung (23), die zwischen der Antriebswelle (15) und der Abtriebswelle (17) vorhanden ist und die Folgendes umfasst:
- eine erste Kupplungshälfte (25), die mit der Antriebswelle (15) verbunden ist, und
- eine zweite Kupplungshälfte (27), die mit der Abtriebswelle (17) verbunden ist, sowie
- eine Schwungradeinheit (13) mit einem An-/Abtrieb (28) und mit:
i) einem Schwungrad (29) und
ii) einer Untersetzungsgetriebeeinheit (31) mit einem Antrieb (33), der mit dem Schwungrad (29) verbunden ist, und einem Abtrieb (35), der mit dem An-/Abtrieb (28) der Schwungradeinheit (13) verbunden ist, und umfassend:
a) ein Untersetzungsgetriebe (37, 45) sowie
b) eine Kupplungsvorrichtung (39, 47), die mit dem Untersetzungsgetriebe (37, 45) verbunden ist, **dadurch gekennzeichnet, dass**
die Schwungradeinheit (13) mit ihrem An-/Abtrieb (28) mit der Kupplungseinheit (11) verbunden ist, wobei dieser An-/Abtrieb (28) über einen Knoten (41) mit der zweiten Kupplungshälfte (27) der ersten Kupplung (23) und/oder mit der Abtriebswelle (17) verbunden ist, wobei das Schwungradmodul (73) ferner eine Hydraulikpumpe (77) umfasst, die mit dem Knoten (41) verbunden ist.

2. Schwungradmodul (73) nach Anspruch 1, **dadurch gekennzeichnet, dass** die erste Kupplung (23) so angeordnet ist, dass sie geschlossen ist, wenn sie nicht erregt ist.

3. Schwungradmodul nach einem der vorhergehenden Ansprüche, **dadurch gekennzeichnet, dass** das Schwungradmodul ferner einen Hydraulikpuffer umfasst, der mit der Pumpe verbunden ist.

4. Schwungradmodul nach Anspruch 3, **dadurch gekennzeichnet, dass** das Schwungradmodul einen die Pumpe antreibenden Elektromotor sowie ein Freilauflager umfasst, das auf der einen Seite zwischen der Pumpe plus dem Elektromotor und dem Knoten auf der anderen Seite positioniert ist.

5. Schwungradmodul (73) nach einem der vorhergehenden Ansprüche, **dadurch gekennzeichnet, dass** das Schwungradmodul (73) ferner Folgendes umfasst:
- erste Kopplungsmittel (85) zum Koppeln der Antriebswelle (15) mit der Antriebsquelle (3) sowie
- zweite Kopplungsmittel (87) zum Koppeln der Abtriebswelle (17) mit dem Getriebe (7), wobei die ersten und zweiten Kopplungsmittel (85, 87) als auf oder in Antriebs- und Abtriebswellen (15, 17) vorhandene Keile angeordnet sind.

6. Schwungradmodul (73) nach einem der vorhergehenden Ansprüche, **dadurch gekennzeichnet, dass** das Untersetzungsgetriebe durch ein Zahnradgetriebe (45) gebildet ist.

7. Schwungradmodul (73) nach Anspruch 6, **dadurch gekennzeichnet, dass** die Kupplungsvorrichtung durch eine zweite Kupplung (47) gebildet ist, die mit dem Untersetzungsgetriebe (45) verbunden ist, wobei das Untersetzungsgetriebe (45) zwischen der zweiten Kupplung (47) und dem Schwungrad (29) positioniert ist.

8. Schwungradmodul (73) nach Anspruch 7, **dadurch gekennzeichnet, dass** die erste Kupplung (23) so angeordnet ist, dass sie geschlossen ist, wenn sie nicht erregt ist.

9. Schwungradmodul (73) nach Anspruch 6, **dadurch gekennzeichnet, dass** die Kupplungsvorrichtung (47) eine Kupplungsstützvorrichtung (65) sowie einen Planetenradsatz (63) mit drei Drehelementen umfasst, von denen ein erstes Drehelement mit der Kupplungsstützvorrichtung (65) verbunden ist, wobei ein zweites Drehelement mit dem Zahnradgetriebe (45) verbunden ist und das dritte Drehelement mit dem An-/Abtrieb der Schwungradeinheit (28) verbunden ist.

10. Schwungradmodul (73) nach einem der vorhergehenden Ansprüche 1 bis 5, **dadurch gekennzeichnet, dass** das Untersetzungsgetriebe durch einen Planetenradsatz (37) und die Kupplungsvorrichtung durch eine Reibungsbremse (39) gebildet ist, wobei der Zahnradsatz (37) drei Drehelemente umfasst, von denen ein erstes Drehelement mit dem Schwungrad (29) verbunden ist, ein zweites Drehelement mit dem Abtrieb (35) der Untersetzungsgetriebeeinheit (31) verbunden ist und das dritte Drehelement mit der Reibungsbremse (39) verbunden ist.

11. Schwungradmodul (73) nach einem der vorhergehenden Ansprüche, **dadurch gekennzeichnet, dass** der An-/Abtrieb (28) der Schwungradeinheit (13) ferner mit der ersten Kupplungshälfte (25) der ersten Kupplung (23) verbunden ist, wobei eine vierte Kupplung (55) zwischen dem An-/Abtrieb (28) des Schwungradmoduls (73) und der ersten Kupplungshälfte (25) positioniert ist.

12. Getriebesystem zur Verwendung in einem Fahrzeug, dass eine als Verbrennungsmotor angeordnete Antriebsquelle (3) und angetriebene Räder (5) umfasst, wobei das Getriebesystem ein Getriebe (7) mit einer ersten An-/Abtriebswelle (19) und einer zweiten An-/Abtriebswelle (21) aufweist, die mit den angetriebenen Rädern (5) verbunden werden kann, sowie ein Schwungradmodul (73) nach einem der vorhergehenden Ansprüche, dessen Antriebswelle (15) mit dem Verbrennungsmotor (3) gekoppelt werden kann und die Abtriebswelle (17) mit dem ersten An-/Abtrieb (19) des Getriebes (7), wobei zwischen dem Knoten (41) und der ersten oder zweiten An-/Abtriebs-(19, 21) welle des Getriebes (7) eine fünfte Kupplung (59, 81) positioniert ist.

13. Verfahren zum Starten eines Verbrennungsmotors (3) eines Fahrzeugs während des Fahrens, wobei das Fahrzeug zusätzlich zu dem Verbrennungsmotor (3) angetriebene Räder (5) und ein Getriebesystem umfasst, das nach Anspruch 12 dazwischen positioniert ist, wobei während des Fahrens die erste Kupplung (23) offen ist und die zweite und fünfte Kupplung (47, 59, 81) geschlossen sind, **dadurch gekennzeichnet, dass** die fünfte Kupplung (59, 81) schlupfend betrieben wird, wobei die erste Kupplung (23) aus diesem Anlass geschlossen ist und der Verbrennungsmotor gestartet wird, wonach die fünfte Kupplung (59, 81) vollständig geschlossen ist.

14. Verfahren zum Starten eines Verbrennungsmotors (3) eines Fahrzeugs während des Starts, wobei das Fahrzeug zusätzlich zu dem Verbrennungsmotor (3) angetriebene Räder (5) sowie ein dazwischen angeordnetes Getriebesystem nach Anspruch 12 umfasst, wobei die erste Kupplung (23) zum Zeitpunkt des Fahrzeugstarts, zu geöffnet ist, die zweite Kupplung (47) geschlossen ist und die fünfte Kupplung (59, 81) sich in einem Schlupfmodus befindet, **dadurch gekennzeichnet, dass** bevor die fünfte Kupplung (59, 81) vollständig geschlossen ist, die erste Kupplung (23) geschlossen ist, wobei der Verbrennungsmotor (23) aus diesem Anlass gestartet wird, wonach die fünfte Kupplung (59, 81) vollständig geschlossen ist.

## Revendications

1. Module formant roue d'inertie (73) destiné à être utilisé dans un véhicule muni d'une source d'entraînement (3) et d'une transmission (7), qui comprend :
- une unité d'accouplement (11) qui comprend :
- un arbre d'entrée (15) qui peut être couplé à la source d'entraînement (3), et
- un arbre de sortie (17) qui peut être couplé à la transmission (7), et qui comprend un premier accouplement (23) qui est présent entre l'arbre d'entrée (15) et l'arbre de sortie (17) et qui comprend :
- une première moitié d'accouplement (25) reliée à l'arbre d'entrée (15), et
- une seconde moitié d'accouplement (27) reliée à l'arbre de sortie (17), et
- une unité formant roue d'inertie (13) qui possède une entrée/sortie (28) et qui comprend :
i) une roue d'inertie (29), et
ii) une unité d'engrenage de réduction (31) qui possède une entrée (33) qui est reliée à la roue d'inertie (29) et une sortie (35) qui est reliée à l'entrée/sortie (28) de l'unité formant roue d'inertie (13), et qui comprend :
a) un engrenage réducteur (37, 45) et
b) un dispositif d'accouplement (39, 47) qui est relié à l'engrenage réducteur (37, 45),
**caractérisé en ce que**
l'unité formant roue d'inertie (13) est reliée avec son entrée/sortie (28) à l'unité d'accouplement (11), cette entrée/sortie (28) étant reliée via un noeud (41) à la seconde moitié d'accouplement (27) du premier accouplement (23) et/ou à l'arbre de sortie (17), dans lequel le module formant roue d'inertie (73) comprend en outre une pompe hydraulique (77) qui est reliée au noeud (41).

2. Module formant roue d'inertie (73) selon la revendication 1, **caractérisé en ce que** le premier accouplement (23) est disposé de sorte que, s'il n'est pas excité, il soit fermé.

3. Module formant roue d'inertie (73) selon l'une quelconque des revendications précédentes, **caractérisé en ce que** le module formant roue d'inertie comprend en outre un amortisseur hydraulique qui est relié à la pompe.

4. Module formant roue d'inertie (73) selon la revendication 3, **caractérisé en ce que** le module formant roue d'inertie comprend un électromoteur qui peut entraîner la pompe, et un palier en roue libre qui est positionné entre, d'une part, la pompe et l'électromoteur, et, d'autre part, le noeud.

5. Module formant roue d'inertie (73) selon l'une quelconque des revendications précédentes, **caractérisé en ce que** le module formant roue d'inertie (73) comprend en outre :
- un premier moyen d'accouplement (85), destiné à accoupler l'arbre d'entrée (15) à la source d'entraînement (3), et
- un second moyen d'accouplement (87), destiné à accoupler l'arbre de sortie (17) à la transmission (7), lesdits premier et second moyens d'accouplement (85, 87) étant disposés comme des cannelures présentes sur ou dans les arbres d'entrée et de sortie (15, 17).

6. Module formant roue d'inertie (73) selon l'une quelconque des revendications précédentes, **caractérisé en ce que** l'engrenage réducteur est composé d'une transmission à engrenage (45).

7. Module formant roue d'inertie (73) selon la revendication 6, **caractérisé en ce que** le dispositif d'accouplement est formé par un second accouplement (47) qui est relié à l'engrenage réducteur (45), avec l'engrenage réducteur (45) positionné entre le second accouplement (47) et la roue d'inertie (29).

8. Module formant roue d'inertie (73) selon la revendication 7, **caractérisé en ce que** le premier accouplement (23) est disposé de sorte qu'il soit fermé s'il n'est pas excité.

9. Module formant roue d'inertie (73) selon la revendication 6, **caractérisé en ce que** le dispositif d'accouplement (47) comprend un dispositif de support d'accouplement (65) et un ensemble d'engrenages planétaires (63) qui comprend trois éléments rotatifs, dont un premier élément rotatif est relié au dispositif de support d'accouplement (65), un second élément rotatif est relié à la transmission à engrenages (45), et le troisième élément rotatif est relié à l'entrée/sortie de l'unité formant roue d'inertie (28).

10. Module formant roue d'inertie (73) selon l'une quelconque des revendications 1 à 5, **caractérisé en ce que** l'engrenage réducteur est composé d'un ensemble d'engrenages planétaires (37) et le dispositif d'accouplement est composé d'un frein à friction (39), ledit ensemble d'engrenages (37) comprenant trois éléments rotatifs, un premier élément rotatif relié à la roue d'inertie (29), un second élément rotatif relié à la sortie (35) de l'unité d'engrenage réducteur (31), et le troisième élément rotatif relié au frein à friction (39).

11. Module formant roue d'inertie (73) selon l'une quelconque des revendications précédentes, **caractérisé en ce que** l'entrée/sortie (28) de l'unité formant roue d'inertie (13) est en outre reliée à la première moitié d'accouplement (25) du premier accouplement (23), avec un quatrième accouplement (55) positionné entre l'entrée/sortie (28) du module formant roue d'inertie (73) et la première moitié d'accouplement (25).

12. Système de transmission destiné à être utilisé dans un véhicule qui comprend une source d'entraînement (3) prévue comme un moteur à combustion et des roues motrices (5), ledit système de transmission comprenant une transmission (7) qui possède un premier arbre d'entrée/sortie (19) et un second arbre d'entrée/sortie (21) qui peuvent être reliés aux roues motrices (5), et un module formant roue d'inertie (73) selon l'une quelconque des revendications précédentes, dans lequel l'arbre d'entrée (15) peut être accouplé au moteur à combustion (3) et l'arbre de sortie (17) peut être accouplé à la première entrée/sortie (19) de la transmission (7), entre le noeud (41) et le premier ou second arbre d'entrée/sortie (19, 21) de la transmission (7) étant positionné un cinquième accouplement (59, 81).

13. Procédé de démarrage d'un moteur à combustion (3) d'un véhicule pendant l'entraînement, ledit véhicule comprenant des roues motrices (5) en plus du moteur à combustion (3) et un système de transmission selon la revendication 12 positionné entre elles, et dans lequel, pendant l'entraînement, le premier accouplement (23) est ouvert et le second et cinquième accouplements (47, 59, 81) sont fermés, **caractérisé en ce que** le cinquième accouplement (59, 81) est déclenché par glissement, à l'occasion duquel le premier accouplement (23) est fermé et le moteur à combustion est démarré, après quoi le cinquième accouplement (59, 81) est complètement fermé.

14. Procédé de démarrage d'un moteur à combustion (3) d'un véhicule pendant son lancement, ledit véhicule comprenant des roues motrices (5) en plus du moteur à combustion (3) et un système de transmission selon la revendication 12 disposé entre elles, dans lequel, lors du lancement du véhicule, le premier accouplement (23) est ouvert, le second accouplement (47) est fermé, et le cinquième (59, 81) accouplement est en mode de glissement, **caractérisé en ce que**, avant que le cinquième accouplement (59, 81) soit complètement fermé, le premier accouplement (23) est fermé, à l'occasion de quoi le moteur à combustion (23) est démarré, et après quoi le cinquième accouplement (59, 81) est complètement fermé.
